Europäisches Patentamt

(19) European Patent Office

Office européen des brevets

(11) Veröffentlichungsnummer: **0 226 901**
A2

## (12) EUROPÄISCHE PATENTANMELDUNG

(21) Anmeldenummer: 86116846.6

(22) Anmeldetag: 03.12.86

(51) Int. Cl.⁴: **C 03 C 17/36**
**H 05 B 3/26**

(30) Priorität: 11.12.85 DE 3543694

(43) Veröffentlichungstag der Anmeldung:
01.07.87 Patentblatt 87/27

(84) Benannte Vertragsstaaten:
AT BE CH DE ES FR GB IT LI LU NL SE

(71) Anmelder: Leybold-Heraeus GmbH
Bonner Strasse 498 Postfach 51 07 60
D-5000 Köln 51(DE)

(72) Erfinder: Dietrich, Anton, Dr.
Heilbrunn 16
D-8441 Wiesenfelden(DE)

(72) Erfinder: Hartig, Klaus, Dr.
Hanauerstrasse 17
D-6451 Ronneburg 2(DE)

(72) Erfinder: Schaefer, Hans-Christian, Dr.
Obermühlenweg 12
D-6456 Langenselbold(DE)

(72) Erfinder: Szczyrbowski, Joachim, Dr.
Ringofenstrasse 5
D-8758 Goldbach(DE)

(74) Vertreter: Zapfe, Hans, Dipl.-Ing.
Seestrasse 2 Postfach 30 04 08
D-6054 Rodgau-3(DE)

(54) Verfahren zum Herstellen von Kontaktbahnen auf Substraten, insbesondere auf Scheiben, und durch das Verfahren hergestellte Scheiben.

(57) Verfahren zum Herstellen von Kontaktbahnen (2, 3) auf Substraten (6), insbesondere auf Scheiben aus Mineralglas. Diese Substrate sind mit einer elektrisch leitfähigen Flächenbeschichtung (8) versehen, die auf der dem Substrat (6) abgekehrten Seite mit mindestens einer Oberflächenschicht (9) aus einem dielektrischen Material überzogen ist. Zur Herstellung der Kontaktbahnen (2 und 3) wird erfindungsgemäß auf die Oberflächenschicht (9) eine Edelmetallsuspension in einer Flüssigkeit nach Maßgabe des Verlaufs der Kontaktbahnen (2, 3) aufgebracht. Anschliessend wird das Substrat (6) mit dem Schichtpaket einer Temperaturbehandlung bei mindestens 100 °C ausgesetzt, bis durch die leitfähige Flächenbeschichtung (8) mittels der Kontaktbahnen (2, 3) ein verminderter Gesamtwiderstand auftritt.

FIG. 2

LEYBOLD-HERAEUS G m b H
Bonner Straße 498

D-5000 Köln - 51

--------------------------------------------------------------

" Verfahren zum Herstellen von Kontaktbahnen
auf Substraten, insbesondere auf Scheiben,
und durch das Verfahren hergestellte Scheiben "

--------------------------------------------------------------

Die Erfindung betrifft ein Verfahren zum Herstellen von
Kontaktbahnen auf Substraten, insbesondere auf Scheiben
aus Mineralglas, mit einer elektrisch leitfähigen Flächenbeschichtung, die auf der dem Substrat abgekehrten Seite
mit mindestens einer Oberflächenschicht aus einem
dielektrischen Material überzogen ist.

Die Produkte eines derartigen Verfahrens dienen, insbesondere dann, wenn die Substrate aus Mineralglasscheiben bestehen, häufig als Front- oder Heckscheiben von Kraftfahrzeugen. Die elektrisch leitfähige Flächenbeschichtung, die dabei meist aus einer dünnen Metallschicht mit hoher Transparenz im sichtbaren Bereich des Lichtspektrums besteht, kann dabei als Heizwiderstand benutzt werden, um Vereisungen abzutauen und Niederschläge von Kondenswasser zu verdampfen. Es ist daher erforderlich, die Widerstandsschicht mit entsprechenden Anschlußkontakten zu versehen, die eine möglichst gleichmäßige Verteilung des Heizstromes über die gesamte Substratfläche gewährleisten und eine örtliche Überhitzung im unmittelbaren Anschlußbereich verhindern.

Es ist insbesondere bei Automobilverglasungen zusätzlich erwünscht, daß die Oberflächenbeschichtung den längerwelligen Teil des Spektrums des Sonnenlichts reflektiert, die sogenannte Wärmestrahlung. Diese Wärmestrahlung ist bei modernen Personenkraftwagen mit schrägstehenden und daher großflächigen Front- und Heckscheiben besonders unerwünscht, weil sie das Innere des Kraftfahrzeuges auf unerträgliche Temperaturen aufheizen kann.

Scheiben, darunter auch solche aus Mineralglas, mit einem entsprechenden spektralen Transmissions- und Reflexionsverhalten sind durch die EP-PS 35 906, die DE-OS 33 07 661 und die EP-OS 104 870 bekannt. Bei den bekannten Scheiben ist eine Silberschicht, die auf einer oder auf beiden Seiten eine Diffusionssperre aus einer dünnen Metallschicht aufweist, zwischen zwei Oxidschichten eingeschlossen, von denen die eine eine Oberflächenschicht ist, die die metallischen Schichten gegenüber chemischen und/oder mechanischen Angriffen schützt. Während die metallischen Schichten, insbesondere die Silberschicht, eine ausreichende elektrische Leitfähigkeit aufweisen, um als Heizwiderstand dienen zu können (jedenfalls solange, wie die Scheibe nicht auf Temperaturen oberhalb 150 °C erwärmt wird), stellt die oxidische Oberflächenschicht einen ausgesprochenen Isolator dar, der die Kontaktierung der darunterliegenden Metallschicht bzw. Metallschichten verhindert. Es ist außerordentlich mühsam, die verhältnismäßig harte, oxidische Oberflächenschicht in einer definierten Dicke zu entfernen, um die darunterliegende Metallschicht mit Kontaktbahnen versehen zu können.

Der Erfindung liegt daher die Aufgabe zugrunde, ein Verfahren zum Herstellen von Kontaktbahnen auf Substraten der eingangs beschriebenen Gattung anzugeben, das zu einer zuverlässigen und stabilen Kontaktierung der elektrisch leitfähigen Flächenbeschichtung führt.

Die Lösung der gestellten Aufgabe erfolgt bei dem eingangs angegebenen Verfahren erfindungsgemäß dadurch, daß man auf die Oberflächenschicht (aus einem dielektrischen Material) eine Edelmetallsuspension in einer Flüssigkeit nach Maßgabe des Verlaufs der Kontaktbahnen aufbringt und das Substrat einer Temperaturbehandlung bei mindestens 100 °C aussetzt, bis durch die leitfähige Flächenbeschichtung mittels der Kontaktbahnen ein verminderter Gesamtwiderstand auftritt.

Derartige Edelmetallsuspensionen sind im Handel erhältlich, beispielsweise unter der Bezeichnung "Leitsilber 200" von der Firma Demetron in Hanau/BRD.

Es ist durch das Buch von Dr. A. F. Bogenschütz "Oberflächentechnik und Galvanotechnik in der Elektronik", Eugen G. Leuze Verlag in Saulgau/Württemberg, Ausgabe 1971, Seite 298, bekannt, pastöse Suspensionen von feinverteiltem Silberpulver in einer Lacksubstanz zu verwenden, um auf Isolierstoffen elektrische Kontakte herzustellen. Es ist durch die gleiche Literaturstelle auch bekannt, daß die Leitfähigkeit durch thermische Alterung noch wesentlich verbessert werden kann. Bei Leitsilber handelt es sich um in Lack kolloidal gelöstes Silber, das aufgestrichen und getrocknet wird. Eine alternative Möglichkeit besteht darin, Silberpulver in einem Gießharz (Araldit) zu suspendieren, um die Haftfestigkeit zu verbessern.

Derartige Suspensionen sind auch für den erfindungsgemäßen Zweck geeignet. Es wurde jedoch beim Aufbringen einer solchen Edelmetallsuspension auf einem
Schichtpaket der eingangs beschriebenen Gattung überraschend festgestellt, daß das Edelmetall, insbesondere
das Silber, aufgrund der Temperaturbehandlung durch
die dielektrische Schicht hindurch und in die
elektrisch leitfähige Flächenbeschichtung (beispielsweise aus Silber) hineindiffundiert und mit den genannten Schichten eine innige Verbindung bzw. Verzahnung eingeht, die nicht nur einen stabilen Stromübergang gewährleistet, sondern auch zu einer ausgezeichneten Haftfestigkeit der betreffenden Kontaktbahnen führt.

Es versteht sich, daß der thermische bedingte Diffusionsprozeß um so schneller verläuft, je höher die Temperatur
ist. Die Erfahrung hat jedoch gezeigt, daß bei etwa
100 °C eine Untergrenze erreicht wird, unterhalb
welcher der Diffusionsprozeß eine unwirtschaftlich
lange Zeit in Anspruch nimmt. Der Diffusionsprozeß
läuft jedoch in einer außerordentlich kurzen Zeit ab,
wenn bei Verwendung eines Substrats aus Mineralglas
die Temperaturbehandlung bei der Erweichungstemperatur
des Mineralglases durchgeführt wird. Diese Erweichungstemperatur beträgt bei einem üblichen Float-Glas
wie einem Natrium-Silikat-Glas 640 °C.

- 6 -

Eine Temperaturbehandlung bei einer derart hohen Temperatur bringt den weiteren Vorteil mit sich, daß die gesamte Glasscheibe auch noch nach dem Aufbringen der Kontaktbahnen plastisch verformt werden kann, um eine Automobil-Scheibe in ihre endgültige, gegebenenfalls stark gewölbte Form zu bringen. Dieser Vorteil ist insbesondere bei der Herstellung von Verbundscheiben in Sandwich-Bauweise nicht zu unterschätzen. Bei derartigen Verbundscheiben befindet sich - ohne Lufteinschluß - zwischen zwei dünnen Scheiben aus Mineralglas eine zäh-elastische Zwischenlage aus einem Kunststoff (z.B. Polyvinylbutyrat). Die beiden (äußeren) Mineralglasscheiben werden im allgemeinen aufeinanderliegend gemeinsam gebogen, was erfindungsgemäß auch mit dem vollständigen Schichtpaket und den Kontaktbahnen möglich ist, wobei das Schichtpaket und die Kontaktbahnen im Trennspalt zwischen den beiden Scheiben liegen. Es ist jetzt nur noch erforderlich - und dieser Verfahrensschritt ist Stand der Technik - zwischen die beiden Mineralglasscheiben die Zwischenlage aus dem zäh-elastischen Kunststoff einzubringen und die Scheiben durch einen thermischen Prozeß unter Vakuum miteinander zu verbinden. Es versteht sich, daß hierbei vor dieser Verbindung die Kontaktbahnen auch noch mit Anschlußdrähten versehen werden können, die aus den beiderseitigen Scheibenrändern nach außen vorstehen.

Die Angabe, daß die Temperaturbehandlung solange durchgeführt wird, bis durch die leitfähige Flächenbeschichtung mittels der Kontaktbahnen ein verminderter Gesamtwiderstand auftritt, soll nicht ein Meß- oder Regelverfahren während der Herstellung definieren. Es kann sich auch um ein abschliessendes Meßverfahren handeln, durch das die Parameter (Temperatur und Zeitdauer) während der Temperaturbehandlung empirisch bestimmt werden. Dies bedeutet, daß der Übergangswiderstand zwischen den aufgebrachten Kontaktbahnen und der leitfähigen Flächenbeschichtung im Vergleich zum Widerstand der leitfähigen Flächenbeschichtung selbst vernachlässigbar klein geworden ist, und somit ein stabiler und gleichmäßiger Stromfluß gewährleistet ist.

Ohne eine solche ausreichende Temperaturbehandlung zeigt sich ein sehr instabiler Stromfluß durch die Anordnung sowie ein offenbar recht hoher Übergangswiderstand.

Um dabei eine möglichst gute Diffusion des Edelmetalls, insbesondere des Silbers, durch die dielektrische Oberflächenschicht zu ermöglichen, wird in besonders vorteilhafter Weise für die Oberflächenschicht ein Oxid mindestens eines der Metalle aus der Gruppe Zinn, Zink, Indium, Tantal, Titan, Zirkon, Nickel und Chrom verwendet. Diese Metalloxide ermöglichen bereits eine ausreichende Diffusion auch dann, wenn die oxidische Oberflächenschicht durch Aufdampfen hergestellt worden ist. Sofern als Beschichtungsverfahren für die oxidische Oberflächenschicht ein reaktives Katodenzerstäubungsverfahren angewandt wird, was aus Gründen der Verfahrensführung vorzuziehen ist, kann die Gruppe der Oxide bzw. der oxidbildenden Metalle noch wesentlich erweitert werden, weil das Katodenzerstäubungsverfahren ganz offensichtlich zu einer Schichtstruktur führt, die für einen Diffusionsprozeß des Edelmetalls für die Kontaktbahnen besser geeignet ist. Auch dieser Vorteil des Katodenzerstäubungsverfahrens wurde überraschend festgestellt.

Die Erfindung betrifft auch eine transparente Scheibe mit einem Substrat mit mindestens einer elektrisch leitfähigen Flächenbeschichtung, die auf der dem Substrat abgekehrten Seite mit einer Oberflächenschicht aus dielektrischem Material überzogen ist. Zur Lösung der gleichen Aufgabe sind auf der Oberflächenschicht mindestens zwei metallische Kontaktbahnen angeordnet, von denen ausgehend Metallatome durch Diffusion bis in die elektrisch leitfähige Flächenbeschichtung hineinreichen.

Weitere vorteilhafte Ausgestaltungen des Erfindungsgegenstandes ergeben sich aus den übrigen Unteransprüchen.

Das erfindungsgemäße Verfahren eignet sich auch und insbesondere für die Kontaktierung von Scheiben, wie sie durch das Verfahren nach der nicht vorveröffentlichten DE-OS 3543 178.4 hergestellt werden.

Ein Ausführungsbeispiel des erfindungsgemäßen Verfahrens wird nachfolgend anhand der Figuren 1 bis 4 näher erläutert.

Es zeigen:

Figur 1      eine Draufsicht auf eine beheizbare Frontscheibe eines Personenkraftwagens,

Figur 2      einen Schnitt durch den Gegenstand von Figur 1 entlang der Linie II-II,

Figur 3      einen Schnitt durch eine Verbundscheibe,    und

Figur 4      ein Diagramm über den zeitlichen Verlauf der Änderung des Gesamtwiderstandes "Kontaktbahn - Dielektrikum - leitfänige Flächenbeschichtung - Dielektrikum - Kontaktbahn" durch zunehmende Dotierung der Dielektrika durch das Edelmetall aus der Suspension.

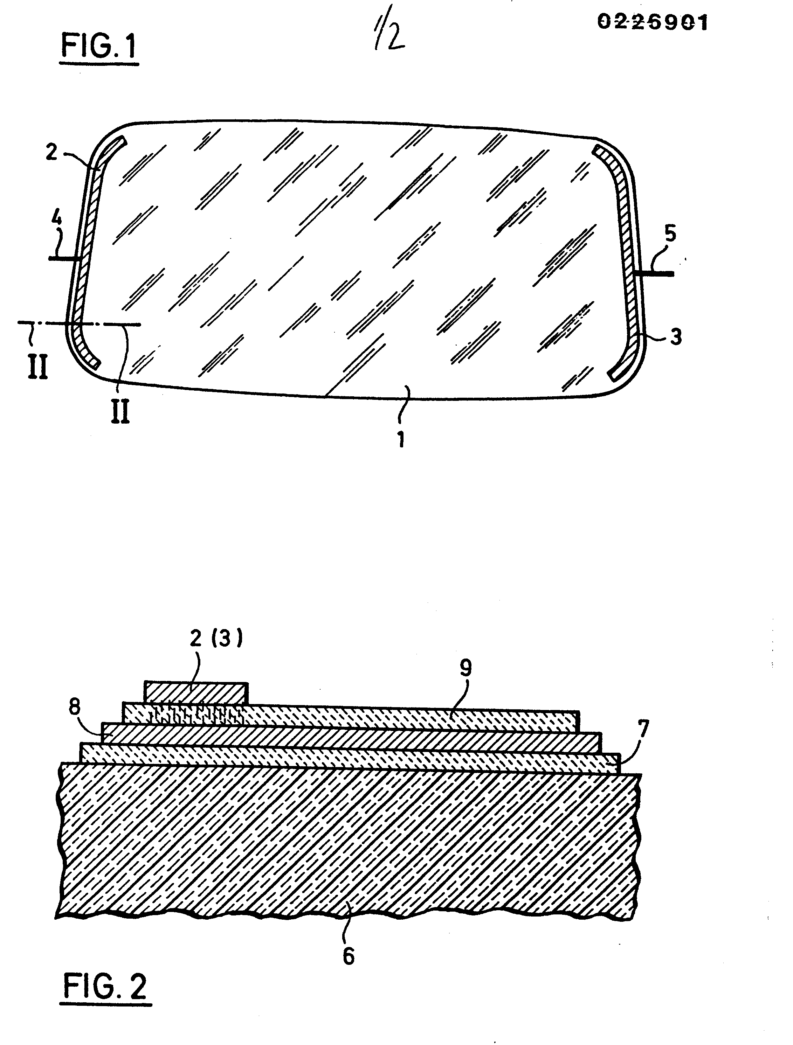

In Figur 1 ist eine Scheibe 1 aus einem Mineralglas gezeichnet, wie es typischerweise für Kraftfahrzeug-Scheiben verwendet wird. Im Randbereich der beiden Schmalseiten sind zwei Kontaktbahnen 2 und 3 angeordnet, die nach dem erfindungsgemäßen Verfahren hergestellt wurden und mit nach außen führenden Anschlußdrähten 4 und 5 verbunden sind. Durch die Anordnung der Kontaktbahnen 2 und 3 wird erreicht, daß die dazwischenliegende Fläche im wesentlichen gleichmäßig vom Heizstrom durchflossen wird.

Die Anordnung muß nicht zwingend so ausgeführt sein, wie in Figur 1 dargestellt. Es sind auch andere geometrische Konfigurationen der Kontaktbahnen möglich, wobei lediglich darauf zu achten ist, daß die gesamte Heizleistung in etwa gleichmäßig über die gesamte zwischen den Kontaktbahnen liegende Oberfläche verteilt wird.

In Figur 2 ist ein Substrat 6 dargestellt, welches das tragende Element der gesamten Scheibe ist. Das Substrat 6 trägt zunächst eine erste Schicht 7, die aus einem oxidischen Dielektrikum, im vorliegenden Fall aus Zinnoxid besteht. Auf dieser Grundschicht befindet sich eine elektrisch leitfähige zweite Schicht 8, die auch aus mehreren metallischen Schichten zusammengesetzt sein kann, was der Einfachheit halber zeichnerisch nicht besonders hervorgehoben wird. Im vorliegenden Fall besteht die zweite Schicht 8 aus insgesamt drei Schichten, nämlich aus einer zentralen Silberschicht, die zwischen zwei Schichten geringer Dicke aus Nickel eingebettet ist. Die Schicht 8 ist elektrisch leitfähig, wobei die Leitfähigkeit durch einen Tempervorgang noch zunimmt. Es handelt sich hierbei um eine Flächenbeschichtung, die im wesentlichen die gesamte Oberfläche des Substrats 6 überzieht.

Auf der elektrisch leitfähigen Schicht 8 befindet sich wiederum eine dritte Schicht, nämlich eine Oberflächenschicht 9, die als Schutzschicht gegen mechanische und chemische Einflüsse dient. Die Oberflächenschicht 9 besteht ebenso wie die Schicht 7 aus Zinnoxid mit einer Dicke von etwa 30 nm. Auf diese Oberflächenschicht wurde eine streich- bzw. pinselfähige Edelmetallsuspension in einem Lösungs- und Bindemittel ("Leitsilber 200") aufgebracht. Nach dem Trocknen und nach der Temperaturbehandlung bildete diese Edelsuspension die Kontaktbahn 2 (siehe auch Figur 1).

Durch den thermischen Behandlungsprozeß ist das Metall der Kontaktbahn 2 durch Diffusion atomar bis in die elektrisch leitfähige Flächenbeschichtung 8 eingedrungen, was durch den gestrichelten Bereich zwischen der Kontaktbahn 2 und der Flächenbeschichtung 8 angedeutet ist. Durch diesen Diffusionsprozeß wird das ursprüngliche Dielektrikum bzw. Oxid mit dem Edelmetall der Suspension, im vorliegenden Fall mit Silber, dotiert, so daß ein Strom zwischen der

elektrisch leitfähigen Flächenbeschichtung 8
und der Kontaktbahn 2 (und analog natürlich der
Kontaktbahn 3) fliessen kann. Die Kontaktbahnen
können ihrerseits wieder mit den Anschlußdrähten 4
und 5 verbunden werden, beispielsweise durch einen
Lötprozeß.

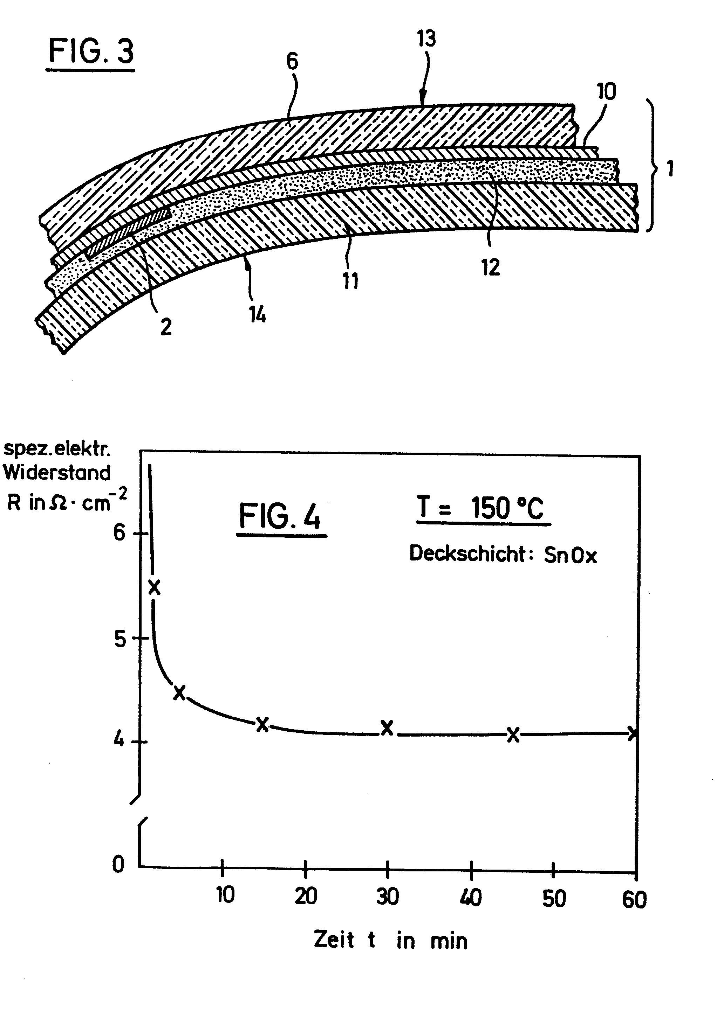

Figur 3 zeigt eine Verbundscheibe, die durch
Biegen einer Anordnung nach Figur 2 hergestellt
wurde. Zu diesem Zweck wurde das Substrat 6 mit
seinem Schichtpaket 10, das hier stellvertretend
für die Schichten 7, 8 und 9 nach Figur 2 steht,
sowie mit den Kontaktbahnen 2 und 3 gebogen, von
denen hier nur die Kontaktbahn 2 dargestellt ist.
Der Biegeprozeß erfolgte gemeinsam mit einer weiteren,
unbeschichteten Scheibe 11, so daß die einander
berührenden Oberflächen des Substrats 6 und der
Scheibe 11 einen geometrisch praktisch identischen
Verlauf haben. Das Schichtpaket 10 und die Kontaktbahnen 2 und 3 können hierbei vernachlässigt werden,
da sie im Vergleich zur Dicke des Substrats 6 und
der Scheibe 11 vernachlässigbar dünn sind. Zwischen
dem Substrat 6 bzw. dessen Schichtpaket 10 und
den Kontaktbahnen 2 und 3 einerseits und der Scheibe 11
andererseits befindet sich eine Folie 12 aus einem
zäh-elastischen Kunststoff (Polyvenylbutyrat). Die
freie Oberfläche 13 des Substrats 6 ist - bezogen auf
den Fahrzeuginnenraum - Außenfläche oder Wetterseite,
während die freie Oberfläche 14 der Scheibe 11 dem Fahrzeuginnenraum zugekehrt ist. Daraus ergibt sich,
daß das Schichtpaket 10 sich auf der Innenseite der
äußeren Scheibe bzw. des Substrats 6 befindet.

Beispiel:

Ein Substrat 6 gemäß Figur 2 wurde nach dem Aufbringen der Schichten 7, 8 und 9 mittels Magnetron-
Katoden in einer Katodenzerstäubungsanlage der
Firma Leybold-Heraeus GmbH, Typ A 1100 Z3H/4
beschichtet und anschliessend durch Aufstreichen
einer Leitpaste des Typs "Leitsilber 200"
nach Maßgabe des Flächenmusters in Figur 1 mit
zwei Kontaktbahnen 2 und 3 versehen. Im Anschluß
daran, wurde die gesamte Anordnung aus Substrat 6,
den Schichten 7, 8 und 9 und den Leiterbahnen 2 und 3
in ebenem Zustand an Luft auf eine einheitliche
Temperatur von 150 °C aufgeheizt und für die Dauer
von 60 Minuten auf dieser Temperatur gehalten.
Während dieser Zeit wurde der Gesamtwiderstand
zwischen den Kontaktbahnen 2 und 3 gemessen. Nach
etwa 2 Minuten trat eine merkliche Abnahme des
Gesamtwiderstandes zwischen den Kontaktbahnen 2 und 3
ein, wobei der Vorgang nach 20 Minuten zum Stillstand
kam. Der zeitliche Verlauf der Widerstandsänderung
ist in Figur 4 dargestellt. Die hohen Werte (unterhalb
von 4 Minuten) beinhalten die hohen Übergangswiderstände zwischen den Kontaktbahnen (2, 3) und der
leitfähigen Flächenbeschichtung (8), der horizontale
Bereich steht im wesentlichen für den nicht mehr veränderlichen Widerstand der Flächenbeschichtung (8).
Beim Einlauf der Meßwerte in den horizontalen Bereich
ist der Dotierungsprozeß im wesentlichen beendet und
die Temperaturbehandlung kann abgebrochen werden.

Beispiel 2:

Das Beispiel nach Figur 1 wurde wiederholt, jedoch mit
dem Unterschied, daß das Substrat 6 mit den Schichten 7,
8 und 9 sowie mit den Kontaktbahnen 2 und 3 an Luft
gleichmäßig auf eine Temperatur von 640 °C aufgeheizt und in der gleichen Hitze gebogen, d.h.
plastisch verformt wurde. Die Verringerung des Gesamtwiderstandes zwischen den Kontaktbahnen 2 und 3 erfolgte
bereits vor Erreichen der Endtemperatur von 640 °C,
so daß davon auszugehen war, daß der Diffusionsprozeß die elektrisch leitfähige Schicht 8 bereits
vollständig erreicht hatte.

Die Kurvendarstellung gilt natürlich nur für ein bestimmtes Schichtensystem und eine bestimmte Behandlungstemperatur, sie hat jedoch für andere Schichtsysteme
und Temperaturen einen ähnlichen oder analogen Verlauf.

A N S P R Ü C H E:

1. Verfahren zum Herstellen von Kontaktbahnen auf Substraten, insbesondere auf Scheiben aus Mineralglas, mit einer elektrisch leitfähigen Flächenbeschichtung, die auf der dem Substrat abgekehrten Seite mit mindestens einer Oberflächenschicht aus einem dielektrischen Material überzogen ist, dadurch gekennzeichnet, daß man auf die Oberflächenschicht eine Edelmetallsuspension in einer Flüssigkeit nach Maßgabe des Verlaufs der Kontaktbahnen aufbringt, und das Substrat einer Temperaturbehandlung bei mindestens 100 °C aussetzt, bis durch die leitfähige Flächenbeschichtung mittels der Kontaktbahnen ein verminderter Gesamtwiderstand auftritt.

2. Verfahren nach Anspruch 1, dadurch gekennzeichnet, daß man als Edelmetallsuspension eine silberhaltige Suspension in einer bindemittelhaltigen Flüssigkeit verwendet.

3. Verfahren nach Anspruch 1, dadurch gekennzeichnet, daß man die Edelmetallsuspension mittels eines Siebdruckverfahrens aufbringt.

4. Verfahren nach Anspruch 1, dadurch gekennzeichnet, daß man für die Oberflächenschicht das Oxid mindestens eines der Metalle aus der Gruppe Zinn, Zink, Indium. Titan, Tantal, Zirkon, Nickel, Chrom verwendet.

5. Verfahren nach Anspruch 1, dadurch gekennzeichnet, daß bei einem Substrat aus Mineralglas die Temperaturbehandlung bei der Erweichungstemperatur des Mineralglases durchgeführt wird.

6. Transparente Scheibe mit einem Substrat mit mindestens einer elektrisch leitfähigen Flächenbeschichtung, die auf der dem Substrat abgekehrten Seite mit einer Oberflächenschicht aus dielektrischem Material überzogen ist, dadurch gekennzeichnet, daß auf der Oberflächenschicht (9) mindestens zwei metallische Kontaktbahnen (2, 3) angeordnet sind, von denen ausgehend Metallatome durch Diffusion bis in die elektrisch leitfähige Flächenbeschichtung hineinreichen.

7. Transparente Verbundscheibe nach Anspruch 6, dadurch gekennzeichnet, daß die verschiedenen Schichten (7, 8, 9) einschließlich der Kontaktbahnen (2, 3) auf der Innenseite der einen, die Verbundscheibe bildenden Scheiben (Substrat 6) angeordnet sind.

## FIG.1

2
4
5
3
II
II
1

## FIG. 2

2 (3)
9
8
7
6

FIG. 2

## FIG. 3

## FIG. 4

spez.elektr. Widerstand R in $\Omega \cdot cm^{-2}$

T = 150 °C

Deckschicht: SnOx

Zeit t in min